# FASCICULE DE BREVET EUROPEEN

(11) **EP 4 684 957 B1**
(45) Date de publication et mention de la délivrance du brevet: **28.10.2026**
(21) Numéro de dépôt: 24315360.8
(22) Date de dépôt: 26.07.2024
(51) Int. Cl.: B32B 5/02, B32B 5/26

(54) **ASSEMBLAGE TEXTILE MULTICOUCHE COMPRENANT DES FIBRES MINERALES DE RENFORT**
MEHRSCHICHTIGE TEXTILANORDNUNG MIT VERSTÄRKENDEN MINERALFASERN
MULTILAYER TEXTILE ASSEMBLY COMPRISING MINERAL REINFORCING FIBRES

(43) Date de publication de la demande: 28.01.2026
(73) Titulaire: AIRBUS HELICOPTERS, 13725 Marignane Cedex (FR); Isomatex, 5032 Gembloux (BE)
(72) Inventeur: VARTANIAN, Tigran, 5032 Gembloux (BE); HENRY, Edwin, 5032 Gembloux (BE); VOSS, Bernard, 5032 Gembloux (BE); BOSCHET, Patric, 13725 Marignane Cedex (FR); PASCAL, Blandine, 13725 Marignane Cedex (FR); AIMAR, Frédéric, 13725 Marignane Cedex (FR); N'GUYEN, Pascal, 13725 Marignane Cedex (FR)
(74) Mandataire: GPI Brevets

(56) Documents cités:
- EP-B1- 3 209 495
- DE-A1- 102022 116 220
- US-A1- 2021 301 436

## Description

La présente invention concerne un assemblage textile multicouche comprenant des fibres minérales de renfort, ainsi qu'un composant structurel composite comprenant un tel assemblage textile, et un véhicule comprenant un tel composant structurel composite.

Un composant structurel composite peut comprendre une pluralité de couches. EP 3 209 495 81 décrit un assemblage textile multicouche comprenant un empilement de couches textiles.

Par exemple, un composant structurel composite peut comprendre une pluralité de couches empilées les unes sur les autres. Dès lors, chaque couche peut être une couche textile de type tissu ou feutre par exemple.

Certains composants structurels composites, en particulier d'un aéronef, sont soumis à des conditions d'utilisation susceptibles de les endommager. Par exemple, un composant structurel composite peut être exposé à des températures élevées, à des fluides agressifs (carburant/comburant, huiles moteurs/lubrifiant, produit de rinçage moteur, détergents), à un vieillissement thermo-oxydatif, à des chocs, et à des risques d'incendie et de corrosion.

En particulier, une cloison d'aéronef délimitant un compartiment moteur logeant un moteur à combustion, est soumise à des températures élevées et à des projections de fluide, et peut devoir résister pendant une durée minimale à un feu. De même, une paroi délimitant un volume logeant une ou des batteries électriques est soumise à un risque de feu.

En outre, un composant structurel composite usuel peut comprendre des liants chimiques. Par exemple, un composant structurel composite usuel peut comprendre des couches de fibres de verre liées entre elles par des liants chimiques. De tels liants chimiques sont susceptibles de dégager des vapeurs nocives, voire inflammables, lors d'une exposition à un feu ou à la chaleur.

Enfin, la masse d'un composant structurel composite est aussi une caractéristique à prendre en considération au sein d'un véhicule, et a fortiori au sein d'un aéronef.

Par suite, la réalisation d'un composant structurel composite devant présenter une résistance mécanique, chimique, à la chaleur et au feu optimisée peut alors s'avérer délicate.

La présente invention vise ainsi un assemblage textile multicouche comprenant un empilement de couches textiles.

Cet assemblage textile comporte une couche externe et une couche de base de part et d'autre d'un cœur, ledit cœur comprenant au moins un sous-ensemble, chaque sous-ensemble dudit au moins un sous ensemble comportant une couche interne tissée et une couche en feutre, la couche interne étant disposée entre la couche en feutre et la couche externe, la couche externe ainsi que la couche de base et la couche interne comprenant des fibres minérales de renfort ensimées continues, la couche en feutre comprenant desdites fibres minérales de renfort ensimées discontinues.

L'expression « la couche interne étant disposée entre la couche en feutre et la couche externe » signifie que la couche interne d'un sous-ensemble particulier est disposée entre la couche en feutre de ce sous-ensemble et la couche externe selon une direction allant de la couche de base vers la couche externe, la couche interne de ce sous-ensemble particulier pouvant être disposée contre la couche externe ou la couche en feutre d'un autre sous-ensemble le cas échéant.

L'assemblage textile peut former un matelas. Un tel matelas forme alors un sous-produit qui peut faire partie intégrante d'un composant structurel composite. Alternativement, les diverses couches peuvent former des sous-produits assemblés lors de la fabrication du composant structurel composite.

Les diverses couches peuvent être liées les unes aux autres mécaniquement à l'aide d'au moins un fil de couture thermorésistant et résistant aux flammes, et/ou par voie chimique à l'aide d'un adhésif ignifugé et/ ou intumescent.

Les fibres minérales de renfort présentent de fait des caractéristiques permettant d'affronter des conditions extrêmes, et en particulier des températures élevées et un feu.

En outre, la couche de base, la couche externe et la ou les couches internes forment des couches tissées qui jouent un rôle d'écran thermique et de renfort mécanique de l'assemblage textile. Ces couches tissées permettent à l'assemblage textile de garder durant le temps d'utilisation une intégrité.

En outre, la ou les couches de feutre forment des couches non tissées qui permettent d'obtenir une épaisseur isolante thermiquement entre la couche externe, exposée à la chaleur ou au feu, et la couche de base opposée en contact avec les éléments à protéger du composant structurel composite.

De plus, la séquence selon laquelle les diverses couches sont empilées les unes par rapport aux autres conditionne l'effet d'isolation thermique obtenu entre la couche de base et la couche externe, mais aussi l'atténuation du flux de chaleur au travers de l'assemblage textile et de protection au feu. Cet agencement tend à limiter la dénaturation et la détérioration thermo-oxydative de couches à la suite à une exposition à la flamme de la couche externe.

La composition des couches de l'assemblage textile ainsi que l'ordre précis d'empilement des couches permettent ainsi en synergie d'obtenir un assemblage textile résistant mécaniquement, chimiquement, ainsi qu'à la chaleur et au feu. Un tel assemblage textile peut ainsi être intégré à un composant structurel composite pour former une protection optimale contre le vieillissement thermique, ainsi que contre la propagation au travers de l'assemblage textile d'un feu, de gaz ou de fluide chaud. Ainsi, les couches tissées et en feutre à base de fibres minérales de renfort et leurs agencements les unes par rapport aux autres permettent d'obtenir un assemblage textile résistant mécaniquement, et au moins à la chaleur et au feu.

Cet assemblage textile peut de plus comporter une ou plusieurs des caractéristiques qui suivent.

Selon une possibilité, chaque couche tissée peut comprendre un tissu unidirectionnel ou multidirectionnel.

Selon une possibilité, compatible avec les précédentes, la couche externe ainsi que la couche interne et la couche de base peuvent avoir chacune un taux de recouvrement supérieur à 95%.

Le taux de recouvrement tx est égal à une surface S1 couverte pas les fibres minérales de renfort divisée par la surface S2 totale de la couche concernée multiplié par 100 soit tx = (S1/S2)*100.

Un tel taux de recouvrement permet de limiter les espaces dans l'assemblage textile. Dès lors, cette caractéristique confère à l'assemblage une efficacité accrue en termes d'effet barrière au feu (oxydation, fusion), à la chaleur et aux projections/passages de fluides (carburant/comburant, huiles moteurs/lubrifiant, produit de rinçage moteur, détergents, environnement extérieur agressif, etc).

Selon une possibilité, compatible avec les précédentes, la couche externe ainsi que la couche interne et la couche de base peuvent comprendre des tissus ayant une armure de type taffetas.

Une armure de type taffetas s'avère efficace pour obtenir un effet barrière optimal.

Selon une possibilité, compatible avec les précédentes, la couche externe ainsi que la couche interne et la couche de base ont chacune une masse surfacique comprise entre 10 g/m² et 1500 g/m², de préférence entre 200 g/m² et 800 g/m².

Plus une couche tissée est densément tissée ou présente une épaisseur importante, plus cette couche tissée absorbe et/ou diffuse la chaleur en son sein. Une couche tissée protège ainsi plus efficacement la ou les couches opposées à la source de feu ou de chaleur, en réduisant le flux de chaleur transmis.

Les masses surfaciques de la couche externe ainsi que de la ou les couches internes et de la couche de base sont maximisées et ajustées en fonction de l'épaisseur et de la masse recherchée pour l'assemblage textile.

A titre d'exemple, l'utilisation d'une couche tissée à armature taffetas et présentant la masse surfacique précitée permet d'obtenir un assemblage textile résistant mécaniquement, à la chaleur, au feu, tout en présentant une épaisseur conférant à l'assemblage textile une masse optimisée rendant possible une application aéronautique.

Selon une possibilité, compatible avec les précédentes, la couche en feutre a une masse surfacique comprise entre 10 g/m² et 1500g/m², de préférence entre 200 g/m² et 1200 g/m².

Plus une couche non-tissée est épaisse, plus la différence de température sera importante de part et d'autre de cette couche. Toutefois, plus la couche est épaisse, plus cette couche non-tissée est lourde. La densité volumique d'une couche non-tissée, à savoir la répartition des fibres et des cavités/cellule d'air dans un volume donné de cette couche, influence son coefficient de conductivité thermique lambda, et de fait la résistance thermique R de la couche non-tissée. En effet, la résistance thermique R est égale au quotient e/lambda où e est l'épaisseur de la couche non tissée et lambda représente le coefficient de conductivité thermique de cette couche.

Pour obtenir un compromis acceptable, la couche non tissée peut donc comprendre une masse surfacique comprise entre 10 et 1500g/m², idéalement entre 200 et 1200 g/m². La masse surfacique peut être ajustée en fonction de l'épaisseur et de la masse souhaitées.

Selon une possibilité, compatible avec les précédentes, la couche externe est équipée d'un revêtement externe de protection.

Ce revêtement externe de protection peut comprendre un oxyde d'aluminium, et notamment le revêtement dénommé ALOx par l'homme du métier. Le revêtement externe de protection peut s'étendre dans l'épaisseur de la couche externe, ou sur une face externe en regard du milieu extérieur ou sur une face interne en regard du cœur de l'assemblage textile. Un positionnement sur la face externe est notamment intéressant.

Selon une possibilité, compatible avec les précédentes, la couche interne est équipée d'un revêtement interne de protection.

Ce revêtement interne de protection peut comprendre un oxyde d'aluminium, et notamment le revêtement ALOx. Le revêtement interne de protection d'une couche interne d'un sous-ensemble peut s'étendre dans l'épaisseur de la couche interne, ou sur une face avant dirigée vers la couche externe ou sur une face arrière en regard du feutre du sous-ensemble. Un positionnement sur la face avant est notamment intéressant.

Il est en effet possible de munir une ou des couches tissées de revêtements de protection sur, en particulier pour la couche externe et une ou plusieurs couches internes, voire pour la couche de base. Un revêtement céramique (géopolymère) thermorésistant peut être intégré à une couche tissée pour renforcer et améliorer sa protection contre l'oxydation et la chaleur, par exemple par réflexion des infrarouges. Un tel revêtement de protection permet également de maintenir la structure de la couche tissée tout au long de sa durée de vie, et de contribuer à maintenir une meilleure intégrité mécanique de cette couche après une exposition prolongée à la flamme, sans initiation et propagation de feu. Le mode de dépôt en surface ou en imprégnation dans l'épaisseur d'une couche tissée d'un tel revêtement, permet aussi d'agir comme barrière d'étanchéité aux gaz.

Selon un exemple, ledit au moins un sous-ensemble décrit précédemment peut comporter un sous-ensemble de surface muni d'une couche interne ayant ledit revêtement interne de protection accolée à la couche externe, cette couche externe étant munie dudit revêtement externe de protection, la couche en feutre de ce sous-ensemble de surface étant accolée à une couche interne d'un autre sous-ensemble ou à la couche de base.

En présence de plusieurs sous-ensembles, seule la couche interne du sous-ensemble accolé à la couche externe peut comprendre un revêtement interne de protection, ou plusieurs couches internes peuvent avoir un tel revêtement interne de protection.

Selon une possibilité, compatible avec les précédentes, lesdites fibres minérales de renfort peuvent comprendre un mélange de minéraux, ledit mélange de minéraux provenant éventuellement de roches volcaniques, ledit mélange de minéraux comprenant du basalte.

De telles fibres minérales de renfort peuvent être obtenues à partir d'un mélange de minéraux provenant de roches volcaniques, comprenant notamment du basalte (y compris des dérivés de cette famille, tel que l'andésite, le gabbro, ...etc.) et des minéraux additionnels.

Les diverses couches de l'assemblage textile peuvent alors, par exemple, comprendre de fibres minérales de renfort connues sous la marque FILAVA^{®}.

Le mélange peut être obtenu à partir de roches volcaniques concassées contenant du basalte et de poudres ou de fractions minérales d'autres minéraux. Par essence, le basalte présente une certaine volatilité sur l'ensemble de la planète. L'utilisation d'un mélange de minéraux permet d'obtenir un mélange homogène, stable et reproductible présentant des propriétés mécaniques élevées, ainsi que des résistances thermiques et chimiques pouvant conduire à l'obtention d'un assemblage textile performant mécaniquement et en utilisation dans des zones chaudes et soumises à un risque de feu.

De plus, de telles fibres à base de roches volcaniques enrichies d'autres minéraux peuvent n'avoir aucune réaction, avec l'air ou l'eau, générant des produits toxiques, et être non combustibles (pas de dégagement de fumées) et antidéflagrantes. Lors du contact avec d'autres produits chimiques, de telles fibres à base de roches volcaniques enrichie d'autres minéraux peuvent être inertes et ne produire aucune réaction chimique.

Eventuellement, les minéraux peuvent avoir une teneur en silice inférieure à 65%m.

Le symbole %m fait référence à un pourcentage massique.

Une telle teneur en silice permet, lors de la fabrication des fibres minérales de renfort, d'obtenir un magma en fusion permettant la fabrication de fibres continues fines. Dans la négative, le magma en fusion est très visqueux ce qui peut l'empêcher de couler dans les dispositifs permettant de générer les fibres minérales de renfort.

Eventuellement, les minéraux peuvent avoir plus de 80%m d'oxydes acides.

Une telle caractéristique présente l'avantage de leur conférer une plus large aptitude de transformation, notamment pour obtenir des fibres fines.

Selon une possibilité, compatible avec les précédentes, lesdites fibres minérales de renfort comprennent un mélange d'oxydes de silicium et d'oxydes métalliques additionnels.

Le mélange peut être obtenu à partir de basalte très répandu.

Selon une possibilité, compatible avec les précédentes, les oxydes métalliques additionnels comprennent un pourcentage massique d'oxydes d'aluminium compris entre 45-55%m, un pourcentage massique d'oxydes de minéraux alcalino-terreux inférieur à 30%m, un pourcentage massique d'oxydes de fer compris entre 9.5 et 10.5 %m.

Un tel mélange permet d'obtenir des fibres minérales de renfort résistantes mécaniquement, chimiquement ainsi qu'à la chaleur et au feu.

Selon une possibilité, compatible avec les précédentes, lesdites fibres minérales de renfort peuvent avoir un indice d'acidité supérieur à environ 5,5.

Cet indice d'acidité est égal à la somme des masses des oxydes acides divisée par la somme des masses des oxydes basiques.

Avec un tel indice d'acidité, il est possible d'obtenir, à partir du mélange de minéraux, une lave en fusion ayant une viscosité permettant la fabrication de fibres minérales de renfort à destination de textile de manière usuelle.

Selon une possibilité, compatible avec les précédentes, lesdites fibres minérales de renfort peuvent avoir une température de ramollissement supérieure à un seuil compris entre 800 et 900 °C, et une température de fusion supérieure à 1150°C.

Ces caractéristiques procurent une excellente résistance thermique aux fibres minérales de renfort.

Selon une possibilité, compatible avec les précédentes, les fibres minérales de renfort de la couche externe ainsi que de la couche interne et de la couche de base sont ensimées différemment de la couche en feutre.

Les fibres minérales de renfort des couches tissées et du feutre peuvent comprendre le même mélange de minéraux, mais peuvent en revanche être ensimées de manières différentes. Les fibres minérales de renfort de la couche externe ainsi que de la couche interne et de la couche de base sont ensimées différemment de la couche en feutre. De manière usuelle, des apprêts de protection et d'ensimage peuvent être appliqués.

Les fibres minérales de renfort des couches tissées peuvent comprendre un ensimage spécifique, compatible avec un procédé de transformation en textilo-plastique, textile ou autres pour les rendre compatibles avec un éventuel revêtement de protection et/ou avec un adhésif potentiel. Les fibres minérales de renfort des couches en feutre peuvent comprendre un ensimage spécifique, compatible avec un procédé de transformation en textilo-plastique, textile ou autres pour obtenir une bonne ouvraison afin d'atteindre un ratio optimal densité volumique - épaisseur permettant de conférer une résistance thermique R maximisée à l'assemblage textile.

Selon un autre aspect, l'invention vise aussi un composant structurel composite. Ce composant structurel composite comporte un corps accolé à la couche de base d'un assemblage textile selon l'invention.

Par ailleurs, un véhicule, et par exemple un aéronef, voire en particulier un giravion, peut comporter un tel composant structurel composite.

L'invention et ses avantages apparaîtront avec plus de détails dans le cadre de la description qui suit avec des exemples donnés à titre illustratif en référence aux figures annexées qui représentent :
la figure 1, une vue éclatée d'un assemblage textile selon l'invention,
la figure 2, une vue d'une couche tissée selon l'invention,
la figure 3, une vue d'une couche en feutre,
la figure 4, une vue éclatée d'un assemblage textile selon l'invention,
la figure 5, une vue éclatée d'un assemblage textile selon l'invention,
la figure 6, une vue d'un composant structurel composite d'un assemblage textile selon l'invention, et
la figure 7, une vue partielle d'un véhicule muni d'un tel composant structurel composite.

Les éléments présents dans plusieurs figures distinctes sont affectés d'une seule et même référence.

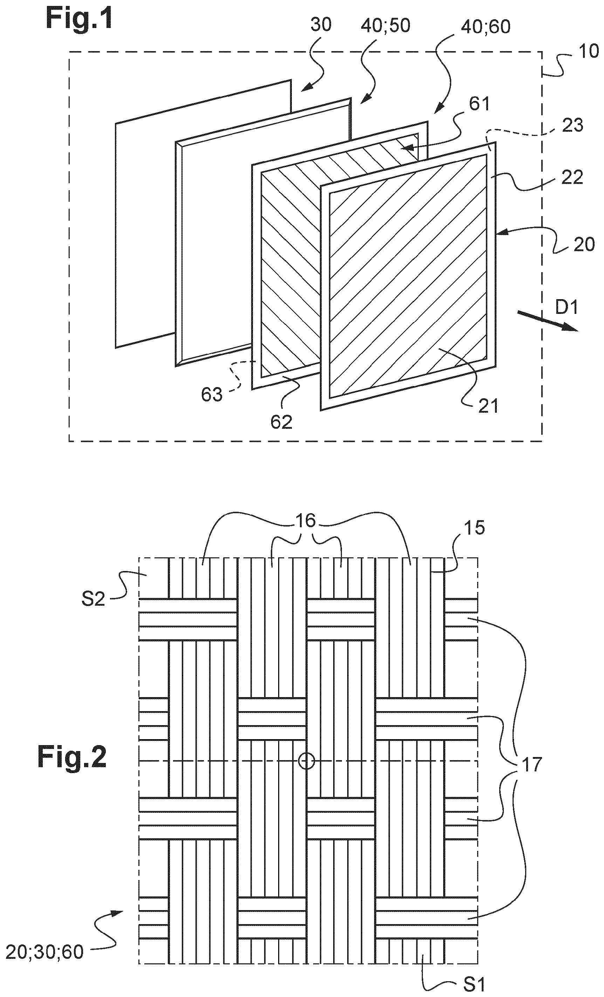

La figure 1 présente un exemple d'un assemblage textile 10 multicouche selon l'invention.

Quelle que soit la réalisation, un tel assemblage textile 10 comporte un empilement de couches textiles. Les diverses couches textiles peuvent être assemblées avec un liant mécanique et/ou un liant chimique.

En particulier, l'assemblage textile 10 comporte une couche externe 20 et une couche de base 30 qui sont disposées de part et d'autre d'un cœur 40 selon une direction dite « direction d'épaisseur D1 » par commodité.

La direction d'épaisseur D1 s'étend de la couche de base 30 vers la couche externe 20. Le terme « épaisseur » associée à une couche fait référence à la dimension de la couche selon la direction d'épaisseur D1. A l'inverse, le terme « surface » fait référence à une aire d'une face perpendiculaire à cette direction d'épaisseur D1.

Par ailleurs, le cœur 40 comprend un ou plusieurs sous-ensembles. Quel que soit le nombre de sous-ensemble, le ou les sous-ensembles comportent chacun une couche interne 60 tissée et une couche en feutre 50. La couche interne 60 tissée est adjacente et/ou accolée à la couche en feutre 50. La couche interne 60 est positionnée entre la couche en feutre 50 et la couche externe 20 selon la direction d'épaisseur D1.

Les figures 1, 4 et 5 illustrent des exemples ayant un seul sous-ensemble, mais l'assemblage textile 10 peut alternativement comprendre au moins deux sous-ensembles.

La figure 2 illustre une couche tissée pouvant être la couche externe 20, ou la couche de base 30 ou une couche interne 60.

En référence à cette figure 2, la couche externe 20 ainsi que la couche de base 30 et la ou les couches internes 60 comprennent des fibres minérales de renfort 15 qui sont ensimées et continues.

En outre, la couche externe 20 ainsi que la couche de base 30 et la ou les couches internes 60 peuvent avoir chacune un taux de recouvrement supérieur à 95%. Autrement dit, pour chaque couche tissée 20, 30, 60, le quotient de la surface S1 couverte par les fibres minérales de renfort 15 de cette couche tissée 20, 30, 60 et la surface S2 couverte par cette couche tissée 20, 30, 60 concernée est supérieur à 0.95. La couche externe 20 ainsi que la couche de base 30 et la ou les couches internes 60 ont chacune très peu d'espaces internes ce qui permet de maximiser leur capacité à faire barrière à un flux de chaleur, à une flamme ou à des projections diverses.

Eventuellement, la couche externe 20 ainsi que la couche de base 30 et la ou les couches internes 60 peuvent avoir chacune une masse surfacique comprise entre 10 g/m² et 1500 g/m², de préférence entre 200 g/m² et 800 g/m².

Les fibres minérales de renfort 15 peuvent former un textile unidirectionnel ou multidirectionnel.

Selon l'exemple illustré, au moins une des couches externe 20, de base 30, et interne 60 peut prendre la forme d'un tissu ayant une armure de type taffetas. Un tel tissu comprend des fibres minérales de renfort 16 disposées selon une direction de trame et des fibres minérales de renfort 17 disposées selon une direction de chaine. Chaque fibre de chaine passe alternativement au-dessus et au-dessous de chaque fibre de trame, et réciproquement. Une telle armure permet d'atteindre un taux de recouvrement et une densité de fibres élevés.

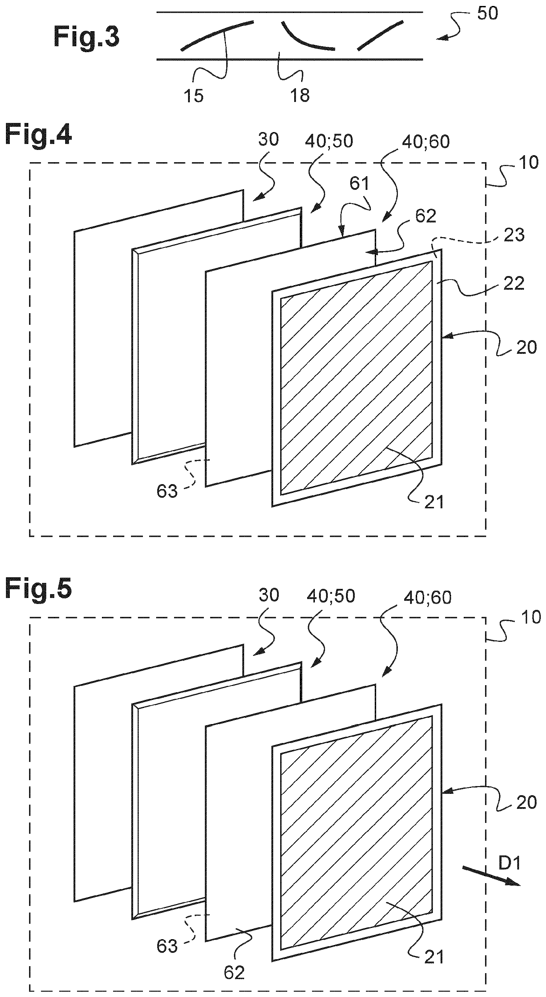

En référence à la figure 3, la ou les couches en feutre 50 comprennent des fibres minérales de renfort 15, ensimées mais discontinues. Les fibres minérales de renfort 15 sont disposées dans une matrice 18.

Eventuellement, la couche en feutre 50 a une masse surfacique comprise entre 10 g/m² et 1500g/m², de préférence entre 200 g/m² et 1200 g/m².

Les fibres minérales de renfort 15 utilisées dans les diverses couches 20,30,40,50,60 sont de même nature, voire identiques.

Ces fibres minérales de renfort 15 peuvent comprendre un mélange de minéraux, ledit mélange de minéraux comprenant du basalte qui peut provenir de roches volcaniques.

Par exemple, les minéraux ont une teneur en silice inférieure à 65%m et / ou plus de 80%m d'oxydes acides.

Eventuellement, les fibres minérales de renfort 15 comprennent un mélange d'oxydes de silicium et d'oxydes métalliques additionnels. Les oxydes métalliques additionnels peuvent avoir la composition suivante : un pourcentage massique d'oxydes d'aluminium compris entre 45-55%m, un pourcentage massique d'oxydes de minéraux alcalino-terreux inférieur à 30%m, un pourcentage massique d'oxydes de fer compris entre 9.5 et 10.5 %m.

Eventuellement, Les fibres minérales de renfort ont un indice d'acidité supérieur à environ 5,5.

Par ailleurs, les fibres minérales de renfort 15 ont favorablement une température de ramollissement supérieure à un seuil compris entre 800 et 900 °C, et une température de fusion supérieure à 1150°C.

Bien que les fibres minérales de renfort 15 soient de même nature, les fibres minérales de renfort 15 de la couche externe 20 ainsi que de la couche interne 60 et de la couche de base 30 sont possiblement ensimées différemment de la couche en feutre 50. L'ensimage est choisi de manière usuelle, par exemple, en fonction des éléments, colles ou revêtements éventuels, disposés contre les diverses couches.

En référence à la figure 1, au moins une couche tissée 20,30,60 peut être munie d'un revêtement de protection.

Ainsi, la couche externe 20 peut être équipée d'un revêtement externe de protection 21. Ce revêtement externe de protection 21 peut être disposé sur la face externe 22 de la couche externe 20 en regard d'un milieu externe, ou sur la face interne 23 de la couche externe 30 disposée contre le cœur 40, ou au sein de la couche externe 20.

Une ou des couches internes 60 peuvent être équipées d'un revêtement interne de protection 61. Un tel revêtement interne de protection 61 peut être disposé sur la face avant 62 de la couche interne 60 disposée contre un autre sous-ensemble ou la couche externe 20, ou sur la face arrière 63 de la couche interne 60 disposée contre la couche en feutre du même sous-ensemble, ou au sein de la couche interne 60. Eventuellement, une couche de base peut aussi comporter un tel revêtement.

Selon les exemples des figures 1 et 4, l'assemblage textile 10 comporte un sous-ensemble de surface muni d'une couche interne 60 ayant un revêtement interne de protection 61 accolée à la couche externe 20, cette couche externe 20 étant munie d'un revêtement externe de protection 21, la couche en feutre 50 de ce sous-ensemble de surface étant accolée à la couche de base 30 mais pouvant être accolée alternativement à un autre sous-ensemble.

En particulier, l'exemple de la figure 1 comprend un revêtement externe de protection 21 sur la face externe 22 de la couche externe 20, et un revêtement interne de protection 61 sur la face avant 62 de la couche externe 20.

A titre illustratif, un tel assemblage textile 10 d'une épaisseur de 10.3 mm, avec des couches tissées 20,30,60 ayant une masse surfacique de 200g/m² et une couche de feutre 50 ayant une masse surfacique de 800g/m², a été exposé avec succès pendant 15 minutes à une flamme d'environ 1300°C-1500°C située à 7-8 cm de la couche externe 20. La flamme n'a pas traversé l'assemblage textile 10 et aucun dégagement de fumée n'a été observé. La face externe 22 de la couche externe 20 exposée à la flamme a présenté des températures de l'ordre de 1100-1170°C alors que la face opposée dans la couche de base 30 a présenté une température de l'ordre de 130-300°C.

L'exemple de la figure 4 comporte un revêtement externe de protection 21 sur la face externe 22 de la couche externe 20, et un revêtement interne de protection 61 non pas sur face avant 62 mais sur sa face arrière 63.

A titre illustratif, un tel assemblage textile 10 d'une épaisseur de 10.3 mm, avec des couches tissées 20,30,60 ayant une masse surfacique de 200g/m² et une couche de feutre 50 ayant une masse surfacique de 800g/m², a été exposé avec succès pendant 15 minutes à une flamme d'environ 1300°C-1500°C située à 7-8 cm de la couche externe 20. La flamme n'a pas traversé l'assemblage textile 10. La face externe 22 de la couche externe 20 exposée à la flamme a présenté des températures de l'ordre de 1060-1150°C alors que la face opposée dans la couche de base 30 a présenté une température de l'ordre de 160-300°C.

Selon l'exemple de la figure 5, la couche interne 60 n'a pas de revêtement de protection.

A titre illustratif, un tel assemblage textile 10 d'une épaisseur de 10.3 mm, avec des couches tissées 20,30,60 ayant une masse surfacique de 200g/m² et une couche de feutre 50 ayant une masse surfacique de 800g/m², a été exposé avec succès pendant 15 minutes à une flamme d'environ 1300°C-1500°C située à 7-8 cm de la couche externe 20. La flamme n'a pas traversé l'assemblage textile 10. La face externe 22 de la couche externe 20 exposée à la flamme a présenté des températures de l'ordre de 1090-1130°C alors que la face opposée dans la couche de base 30 a présenté une température de l'ordre de 240-300°C.

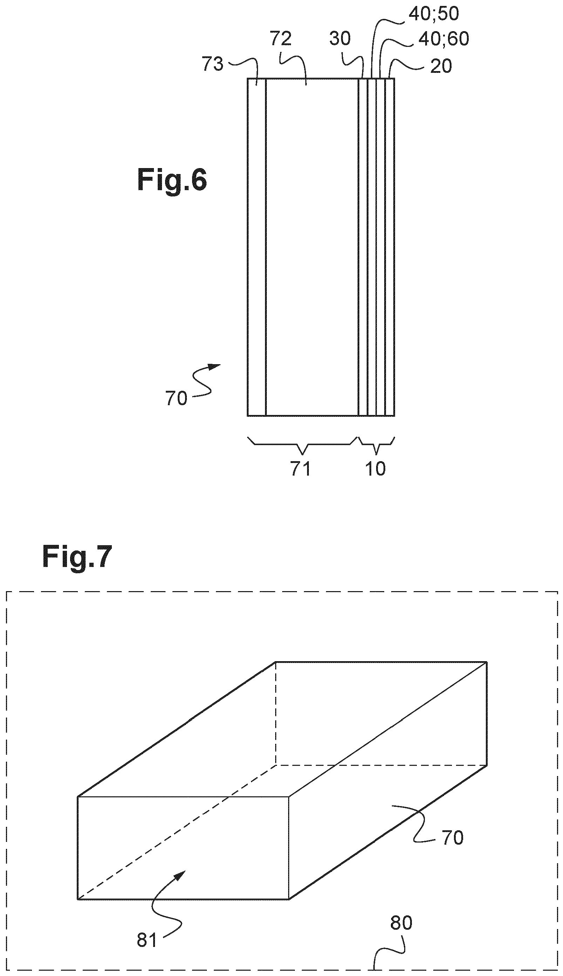

En référence à la figure 6, un assemblage textile 10 selon l'invention peut être une partie constituante d'un composant structurel composite 70. L'assemblage textile 10 peut prendre la forme d'un matelas assemblé préalablement à son agencement au sein du composant structurel composite 70. Alternativement, les diverses couches de l'assemblage textile 10 ont été assemblées lors de la fabrication du composant structurel composite 70.

Ce composant structurel composite 70 comporte dès lors un corps 71 solidarisé à la couche de base 30 de l'assemblage textile 10. A titre d'exemple, le corps 71 peut comprendre une âme 72 solidarisée à la couche de base 30 et à une peau 73, l'âme 72 s'étendant de la peau 73 à la couche de base 30.

Par ailleurs, la figure 7 illustre un véhicule 80. Ce véhicule 80 comporte un tel composant structurel composite 70, pour par exemple délimiter une zone 81 présentant un risque de feu ou des températures élevées, de l'ordre de plusieurs centaines de degrés Celsius par exemple.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Assemblage textile (10) multicouche comprenant un empilement de couches textiles,
**caractérisé en ce que** ledit assemblage textile (10) comporte une couche externe (20) et une couche de base (30) de part et d'autre d'un cœur (40), ledit cœur (40) comprenant au moins un sous-ensemble, chaque sous-ensemble dudit au moins un sous ensemble comportant une couche interne (60) tissée et une couche en feutre (50), la couche interne (60) étant disposée entre la couche en feutre (50) et la couche externe (20), la couche externe (20) ainsi que la couche de base (30) et la couche interne (60) comprenant des fibres minérales de renfort (15) ensimées continues, la couche en feutre (50) comprenant desdites fibres minérales de renfort (15) ensimées discontinues.

2. Assemblage textile (10) selon la revendication 1,
**caractérisé en ce que** la couche externe (20) ainsi que la couche interne (60) et la couche de base (30) ont chacune un taux de recouvrement supérieur à 95%.

3. Assemblage textile (10) selon l'une quelconque des revendications 1 à 2,
**caractérisé en ce que** la couche externe (20) ainsi que la couche interne (60) et la couche de base (30) comprennent des tissus ayant une armure de type taffetas.

4. Assemblage textile selon l'une quelconque des revendications 1 à 3,
**caractérisé en ce que** la couche externe (20) ainsi que la couche interne (60) et la couche de base (30) ont chacune une masse surfacique comprise entre 10 g/m² et 1500 g/m², de préférence entre 200 g/m² et 800 g/m².

5. Assemblage textile selon l'une quelconque des revendications 1 à 4,
**caractérisé en ce que** la couche en feutre (50) a une masse surfacique comprise entre 10 g/m² et 1500g/m², de préférence entre 200 g/m² et 1200 g/m².

6. Assemblage textile selon l'une quelconque des revendications 1 à 5,
**caractérisé en ce que** la couche externe (20) est équipée d'un revêtement externe de protection (21).

7. Assemblage textile selon l'une quelconque des revendications 1 à 6,
**caractérisé en ce que** la couche interne (60) est équipée d'un revêtement interne de protection (61).

8. Assemblage textile selon les revendications 6 et 7,
**caractérisé en ce que** ledit au moins un sous-ensemble comporte un sous-ensemble de surface muni d'une couche interne (60) ayant ledit revêtement interne de protection (61) accolée à la couche externe (20), cette couche externe (20) étant munie dudit revêtement externe de protection (21), la couche en feutre (50) de ce sous-ensemble de surface étant accolée à une couche interne d'un autre sous-ensemble ou à la couche de base (30).

9. Assemblage textile selon l'une quelconque des revendications 1 à 8,
**caractérisé en ce que** lesdites fibres minérales de renfort (15) comprennent un mélange de minéraux, ledit mélange de minéraux comprenant du basalte.

10. Assemblage textile selon la revendication 9,
**caractérisé en ce que** les minéraux ont une teneur en silice inférieure à 65%m.

11. Assemblage textile selon l'une quelconque des revendications 9 à 10,
**caractérisé en ce que** les minéraux ont plus de 80%m d'oxydes acides.

12. Assemblage textile selon l'une quelconque des revendications 1 à 11,
**caractérisé en ce que** lesdites fibres minérales de renfort (15) comprennent un mélange d'oxydes de silicium et d'oxydes métalliques additionnels.

13. Assemblage textile selon la revendication 12,
**caractérisé en ce que** les oxydes métalliques additionnels comprennent un pourcentage massique d'oxydes d'aluminium compris entre 45-55%m, un pourcentage massique d'oxydes de minéraux alcalino-terreux inférieur à 30%m, un pourcentage massique d'oxydes de fer compris entre 9.5 et 10.5 %m.

14. Assemblage textile selon l'une quelconque des revendications 1 à 13,
**caractérisé en ce que** lesdites fibres minérales de renfort ont un indice d'acidité supérieur à environ 5,5.

15. Assemblage textile selon l'une quelconque des revendications 1 à 14,
**caractérisé en ce que** lesdites fibres minérales de renfort (15) ont une température de ramollissement supérieure à un seuil compris entre 800 et 900 °C, et une température de fusion supérieure à 1150°C.

16. Assemblage textile selon l'une quelconque des revendications 1 à 15,
**caractérisé en ce que** les fibres minérales de renfort (15) de la couche externe (20) ainsi que de la couche interne (60) et de la couche de base (30) sont ensimées différemment de la couche en feutre (50).

17. Composant structurel composite (70),
**caractérisé en ce que** ledit composant structurel composite (70) comporte un corps (71) accolé à la couche de base (30) d'un assemblage textile (10) selon l'une quelconque de revendications 1 à 16.

18. Véhicule (80),
**caractérisé en ce que** le véhicule (80) comporte un composant structurel composite (70) selon la revendication 17.

## Patentansprüche

1. Mehrschichtiger Textilverbund (10), der einen Stapel aus Textilschichten umfasst,
**dadurch gekennzeichnet, dass** der Textilverbund (10) eine Außenschicht (20) und eine Basisschicht (30) auf beiden Seiten eines Kerns (40) aufweist, wobei der Kern (40) eine oder mehrere Unterbaugruppen umfasst, wobei jede der ein oder mehreren Unterbaugruppen eine gewebte Innenschicht (60) und eine Filzschicht (50) aufweist, wobei die Innenschicht (60) zwischen der Filzschicht (50) und der Außenschicht (20) angeordnet ist, wobei die Außenschicht (20) sowie die Basisschicht (30) und die Innenschicht (60) endlose beschichtete mineralische Verstärkungsfasern (15) umfassen, während die Filzschicht (50) diskontinuierliche beschichtete mineralische Verstärkungsfasern (15) umfasst.

2. Textilverbund (10) nach Anspruch 1,
**dadurch gekennzeichnet, dass** die Außenschicht (20) sowie die Innenschicht (60) und die Basisschicht (30) jeweils einen Überlappungsgrad von mehr als 95 % aufweisen.

3. Textilverbund (10) nach einem der Ansprüche 1 bis 2,
**dadurch gekennzeichnet, dass** die Außenschicht (20) sowie die Innenschicht (60) und die Basisschicht (30) Gewebe mit einer Taftbindung umfassen.

4. Textilverbund (10) nach einem der Ansprüche 1 bis 3,
**dadurch gekennzeichnet, dass** die Außenschicht (20) sowie die Innenschicht (60) und die Basisschicht (30) jeweils ein Flächengewicht zwischen 10 g/m² und 1500 g/m², vorzugsweise zwischen 200 g/m² und 800 g/m², aufweisen.

5. Textilverbund nach einem der Ansprüche 1 bis 4,
**dadurch gekennzeichnet, dass** die Filzschicht (50) ein Flächengewicht zwischen 10 g/m² und 1500 g/m², vorzugsweise zwischen 200 g/m² und 1200 g/m², aufweist.

6. Textilverbund nach einem der Ansprüche 1 bis 5,
**dadurch gekennzeichnet, dass** die Außenschicht (20) mit einer äußeren Schutzbeschichtung (21) versehen ist.

7. Textilverbund nach einem der Ansprüche 1 bis 6,
**dadurch gekennzeichnet, dass** die Innenschicht (60) mit einer inneren Schutzbeschichtung (61) versehen ist.

8. Textilverbund nach den Ansprüchen 6 und 7,
**dadurch gekennzeichnet, dass** die mindestens eine Unterbaugruppe eine Oberflächen-Unterbaugruppe umfasst, die mit einer Innenschicht (60) versehen ist, dass die Innenschutzbeschichtung (61) an die Außenschicht (20) angefügt ist, dass diese Außenschicht (20) mit der Außenschutzbeschichtung (21) versehen ist, und dass die Filzschicht (50) dieser Oberflächen-Unterbaugruppe an eine Innenschicht einer anderen Unterbaugruppe oder an die Basisschicht (30) angefügt ist.

9. Textilverbund nach einem der Ansprüche 1 bis 8,
**dadurch gekennzeichnet, dass** die mineralischen Verstärkungsfasern (15) ein Mineralgemisch umfassen, wobei das Mineralgemisch Basalt enthält.

10. Textilverbund nach Anspruch 9,
**dadurch gekennzeichnet, dass** die Mineralien einen Siliziumdioxidgehalt von weniger als 65 Massen-% aufweisen.

11. Textilverbund nach einem der Ansprüche 9 bis 10,
**dadurch gekennzeichnet, dass** die Mineralien mehr als 80 Massen-% an sauren Oxiden enthalten.

12. Textilverbund nach einem der Ansprüche 1 bis 11,
**dadurch gekennzeichnet, dass** die mineralischen Verstärkungsfasern (15) eine Mischung aus Siliziumoxiden und zusätzlichen Metalloxiden umfassen.

13. Textilverbund nach Anspruch 12,
**dadurch gekennzeichnet, dass** die zusätzlichen Metalloxide einen Massenanteil an Aluminiumoxiden zwischen 45 und 55 Massen-%, einen Massenanteil an Erdalkalimetalloxiden von weniger als 30 Massen-% und einen Massenanteil an Eisenoxiden zwischen 9,5 und 10,5 Massen-% umfassen.

14. Textilverbund nach einem der Ansprüche 1 bis 13,
**dadurch gekennzeichnet, dass** die genannten mineralischen Verstärkungsfasern eine Säurezahl von mehr als etwa 5,5 aufweisen.

15. Textilverbund nach einem der Ansprüche 1 bis 14,
**dadurch gekennzeichnet, dass** die mineralischen Verstärkungsfasern (15) eine Erweichungstemperatur oberhalb eines Schwellenwerts zwischen 800 und 900 °C und eine Schmelztemperatur von mehr als 1150 °C aufweisen.

16. Textilverbund nach einem der Ansprüche 1 bis 15,
**dadurch gekennzeichnet, dass** die mineralischen Verstärkungsfasern (15) der Außenschicht (20) sowie der Innenschicht (60) und der Basisschicht (30) anders beschichtet sind als die Filzschicht (50).

17. Verbundbauteil (70),
**dadurch gekennzeichnet, dass** das Verbundbauteil (70) einen Körper (71) aufweist, der an die Basisschicht (30) eines Textilverbunds (10) gemäß einem der Ansprüche 1 bis 16 angefügt ist.

18. Verkehrsmittel (80),
**dadurch gekennzeichnet, dass** das Verkehrsmittel (80) ein Verbundbauteil (70) gemäß Anspruch 17 aufweist.

## Claims

1. Multilayer textile assembly (10) comprising a stack of textile layers,
**characterised in that** said textile assembly (10) has an external layer (20) and a base layer (30) on either side of a core (40), said core (40) comprising at least one sub-assembly, each sub-assembly of said at least one sub-assembly having a woven internal layer (60) and a felt layer (50), the internal layer (60) being disposed between the felt layer (50) and the external layer (20), the external layer (20) as well as the base layer (30) and the internal layer (60) comprising continuous sized mineral reinforcing fibres (15), the felt layer (50) comprising said discontinuous sized mineral reinforcing fibres (15).

2. Textile assembly (10) according to claim 1,
**characterised in that** the external layer (20) as well as the internal layer (60) and the base layer (30) each have a coverage rate greater than 95%.

3. Textile assembly (10) according to any one of claims 1 to 2,
**characterised in that** the external layer (20) as well as the internal layer (60) and the base layer (30) comprise fabrics having a taffeta-type weave.

4. Textile assembly according to any one of claims 1 to 3,
**characterised in that** the external layer (20) as well as the internal layer (60) and the base layer (30) each have a surface mass of between 10g/m² and 1500g/m², preferably of between 200g/m² and 800g/m².

5. Textile assembly according to any one of claims 1 to 4,
**characterised in that** the felt layer (50) has a surface mass of between 10g/m² and 1500g/m², preferably of between 200g/m² and 1200g/m².

6. Textile assembly according to any one of clams 1 to 5,
**characterised in that** the external layer (20) is equipped with a protective external coating (21).

7. Textile assembly according to any one of claims 1 to 6,
**characterised in that** the internal layer (60) is equipped with a protective internal coating (61).

8. Textile assembly according to claims 6 and 7,
**characterised in that** said at least one sub-assembly has a surface sub-assembly provided with an internal layer (60) having said protective internal coating (61) attached to the external layer (20), this external layer (20) being provided with said protective external coating (21), the felt layer (50) of this surface sub-assembly being attached to an internal layer of another sub-assembly or to the base layer (30).

9. Textile assembly according to any one of claims 1 to 8,
**characterised in that** said mineral reinforcing fibres (15) comprising a mixture of minerals, said mixture of minerals comprising basalt.

10. Textile assembly according to claim 9,
**characterised in that** the minerals have a silica content of less than 65%m.

11. Textile assembly according to any one of claims 9 to 10,
**characterised in that** the minerals have more than 80%m of acid oxides.

12. Textile assembly according to any one of claims 1 to 11,
**characterised in that** said mineral reinforcing fibres (15) comprise a mixture of silicon oxides and additional metal oxides.

13. Textile assembly according to claim 12,
**characterised in that** the additional metal oxides comprise a mass percentage of aluminum oxides of between 45-55%m, a mass percentage of alkaline-earth mineral oxides of less than 30%m, a mass percentage of iron oxides of between 9.5 and 10.5%m.

14. Textile assembly according to any one of claims 1 to 13,
**characterised in that** said mineral reinforcing fibres have an acid number greater than around 5.5.

15. Textile assembly according to any one of claims 1 to 14,
**characterised in that** said mineral reinforcing fibres (15) have a softening temperature greater than a threshold of between 800 and 900°C, and a melting point greater than 1150°C.

16. Textile assembly according to any one of claims 1 to 15,
**characterised in that** the mineral reinforcing fibres (15) of the external layer (20) as well as the internal layer (60) and of the base layer (30) are sized differently from the felt layer (50).

17. Composite structural component (70),
**characterised in that** said composite structural component (70) has a body (71) attached to the base layer (30) of a textile assembly (10) according to any one of claims 1 to 16.

18. Vehicle (80),
**characterised in that** the vehicle (80) has a composite structural component (70) according to claim 17.
